## Europäisches Patentamt
## European Patent Office
## Office européen des brevets

(19)

(11) Veröffentlichungsnummer : **0 146 584 B1**

(12) # EUROPÄISCHE PATENTSCHRIFT

(45) Veröffentlichungstag der Patentschrift :
17.05.89

(51) Int. Cl.⁴ : **G 01 P 5/10**

(21) Anmeldenummer : 84902194.4

(22) Anmeldetag : 14.06.84

(86) Internationale Anmeldenummer :
PCT/CH 84/00096

(87) Internationale Veröffentlichungsnummer :
WO/8500059 (03.01.85 Gazette 85/01)

(54) MESSGERAET ZUR BESTIMMUNG DER WINDGESCHWINDIGKEIT.

(30) Priorität : 17.06.83 CH 3316/83

(43) Veröffentlichungstag der Anmeldung :
03.07.85 Patentblatt 85/27

(45) Bekanntmachung des Hinweises auf die Patenterteilung : 17.05.89 Patentblatt 89/20

(84) Benannte Vertragsstaaten :
BE CH DE FR GB LI NL SE

(56) Entgegenhaltungen :
DE–A– 2 605 195
DE–A– 3 216 613
FR–A– 2 018 679
US–A– 3 352 154
Siemens Bauteile Informationen, Vol. 8, April 1970,
No. 2, München (DE), Löbl et al.: "Kaltleiter-Strömungsmesser hoher Empfinlichkeit", Seiten 62-65,
siehe Seite 64, Spalte 2, Zeilen 1-19; Figur 5
Die Akte enthält technische Angaben, die nach dem
Eingang der Anmeldung eingereicht wurden und die
nicht in dieser Patentschrift enthalten sind.

(73) Patentinhaber : **INSTITUT DE RECHERCHE ET DE DEVELOPPEMENT AEROLOGIQUE MARKETING S.A.**
15, rte. de Lausanne
CH-1400 Yverdon (CH)

(72) Erfinder : BURGOS, Ernesto
26, rue d'Orbe
CH-1400 Yverdon (CH)

## Beschreibung

Die Erfindung betrifft ein Verfahren zur Messung der Windgeschwindigkeit und -richtung entsprechend dem Oberbegriff des Anspruchs 1.

Die Erfindung betrifft ferner ein Messgerät zur Messung der Windgeschwindigkeit und -richtung entsprechend dem Oberbegriff des Anspruchs 2.

Aus der US-PS 4.279.147 ist ein Windgeschwindigkeitsmessgerät bekannt geworden, welches im Prinzip aus zwei in einer Wheatstonebrücke geschalteten temperaturabhängigen Widerstandsmessfühlern besteht. Diese Widerstandsmessfühler sind dem Wind derard ausgesetzt, dass der Kühleffekt der vorbeistreichenden Luft bei jedem der Messfühler unterschiedlich ist, und zwar unabhängig von der Windgeschwindigkeit. Bei den Widerstandsmessfühlern handelt es sich um Hitzfilmmessfühler, wobei ein Platinfilm rund um einen zylinderförmigen Träger angeordnet ist, und diesen über seine gesamte Länge umgibt.

Das Prinzip der Messung besteht darin, dass die beiden Widerstandsmessfühler durch ohm'sche Wärme soweit aufgeheizt werden bis die Summe ihrer Widerstände einen bestimmten Wert ergibt. Wenn dieser Zustand erreicht wird, wird mittels der Brückenschaltung der Unterschied der beiden Messwiderstände ausgewertet. Es ist nachteilig bei dieser Art der Messung dass die Zuordnung des in der oben beschriebenen Weise erhaltenen Messignals zu einer definierten Windgeschwindigkeit über eine rein empirisch ermittelte Eichkurve erfolgt, da hierdurch bei Auftreten von Ablagerungen an der Oberfläche der beiden Messfühler undefinierte Veränderungen auftreten, welche das Messergebnis verfälschen.

Das in der erwähnten amerikanischen Patentschrift gezeigte Messgerät soll weiter zur Bestimmung der Windrichtung dienen, wobei eine Aussage über diese Richtung ebenfalls durch unterschiedliche Widerstandswerte der beiden Messfühler erhalten wird. Hierdurch ergibt sich eine Zweideutigkeit in der Auswertung, da in gewissen Fällen nicht festgestellt werden kann, ob ein festgestellter Unterschied der Messfühler auf eine bestimmte Windrichtung oder auf eine bestimmte Windgeschwindigkeit hindeutet.

Aus der amerikanischen Patentschrift 4.206.638 ist ein ähnliches Messgerät zur Bestimmung der Windgeschwindigkeit bekannt, bei welchem die Anordnung der Widerstandsmessfühler gegenüber der vorerwähnten amerikanischen Patentschrift modifiziert ist. Es ist hierdurch möglich, Windgeschwindigkeiten bzw. Windrichtungen in verschiedenen Ebenen zu messen, wobei die Messmethode die gleiche ist wie in der vorerwähnten US 4.279.147.

Die DE-A-2.605.195 beschreibt ein Messgerät zur Bestimmung der Wingeschwindigkeit und -richtung entsprechend dem Oberbegriff des vorliegenden Anspruchs 1, wobei eine beheizte Masse von aussen her gekühlt wird. Die Widerstandsmessfühler zur Bestimmung der Temperatur sind auf der Innenseite einer die beheizte Masse umgebenden metallischen Hülle angeordnet.

US-A-3.352.154 betrifft ein Anemometer, bei welchem Hitzdrahtsensoren auf einem zylindrischen Tragkörper angeordnet sind. Die Heizung der Messelemente erfolgt hierbei durch die ohm'sche Erwärmung der Hitzdraht- bzw. Hitzfilmsensoren selbst. Diese Messelemente werden bezüglich ihres Widerstandswerts in einer Vergleichsschaltung verglichen.

FR-A-2.018.679 beschreibt einen Windkanal mit eingebautem Anemometer, wobei das Anemotersignal in Form einer Frequenz zur Verfügung gestellt wird.

Es ist Aufgabe der Erfindung, ein Verfahren und ein Messgerät zur Messung der Windgeschwindigkeit und -richtung bereitzustellen, welche eine gegenüber dem Stand der Technik erhöhte Genauigkeit aufweisen, und welche diese Genauigkeit auch bei Betrieb unter erschwerten Umweltbedingungen wie dies beispielsweise in der Umgebung von Meerwasser oder Wüstensand der Fall ist, beibehalten.

Erfindungsgemäss wird diese Aufgabe gelöst durch ein Verfahren der eingangs genannten Art, welches gekennzeichnet ist durch die Merkmale des kennzeichnenden Teils des vorliegenden Anspruchs 1.

Ferner wird diese Aufgabe gelöst durch ein Messgerät der eingangs genannten Art, welches gekennzeichnet ist durch die Merkmale des kennzeichnenden Teils des vorliegenden Anspruchs 2.

Die Sensoreinrichtung des erfindungsgemässen Messgerätes kann aus einem Metallzylinder bestehen, welcher den Vorteil aufweist, dass auf Grund der relativ geringen Wärmekapazität des Metalls nur wenig Energie aufgewendet werden muss um die Sensoreinrichtung auf eine gegenüber der Umgebungstemperatur erhöhte Temperatur zu bringen.

Der Widerstandsmessfühler kann aus einem um den Metallzylinder herum und in gutem thermischen Kontakt und elektrisch isoliert zu diesem angeordneten Widerstandsfilm bestehen, welcher auf Grund des guten thermischen Kontaktes auf gleicher Temperatur gehalten wird, wie der Metallzylinder selbst. Durch diese Anordnung ist ein ausreichender Wärmeaustausch zwischen dem beheizten Metallzylinder und dem der Messung dienenden Widerstandsfilm gegeben.

Der Widerstandsfilm kann als frequenzbestimmender Widerstand einer elektronischen Zeitgeberschaltung (IC 555) geschaltet sein, wodurch eine sehr exakte Bestimmung des Widerstandes ermöglicht ist.

Die Sensoreinrichtung weist einen zweiten Widerstandsmessfühler mit einer Mehrzahl von gleichmässig um den Metallzylinder herum angeordneten Teilmessfühlern auf, durch welche in einer zu dem beim ersten Widerstandsmessfühler angewandten vorgehen analogen Weise Teilsignale erzeugbar sind, durch welche die Windrichtung bestimmbar ist. Durch eine derartige Anordnung der Teilmessfühler wird erreicht, dass die Aussage über die Windrichtung nicht nur eine Information enthält ob der Wind von links oder von rechts kommt, sondern dass die Richtung exakt bestimmbar ist.

Dem Widerstandsmessfühler und jedem Teilmessfühler kann ein logischer Schaltkreis nachgeschaltet sein, durch welchen ein vom gemessenen elektrischen Widerstand abhängendes digitales Messignal erzeugbar ist. Durch die Digitalisierung der Auswertelektronik, wird ein weitaus höherer Genauigkeitsgrad erreicht, als bei einer analogen Auswertung, und es wird ferner erreicht, dass diese Messwerte über einen längeren Zeitraum hinweg von etwaigen Alterungseinflüssen von elektronischen Bestandteilen unbeeinflusst bleiben.

Die Signale der logischen Schaltkreise können einem Mikroprozessor zugeführt werden, durch dessen Auswerteprogramm ebenfalls eine zeitliche Konstanz der Messgenauigkeit gegeben ist.

Das Ausgangssignal, welches der Windgeschwindigkeit oder der Windrichtung entspricht, kann einer Steuereinrichtung für einen, vom Wind abhängigen Steuervorgang zugeführt werden. Beispiele hierfür sind Korrektionsmodule für Schussbahnberechnungen.

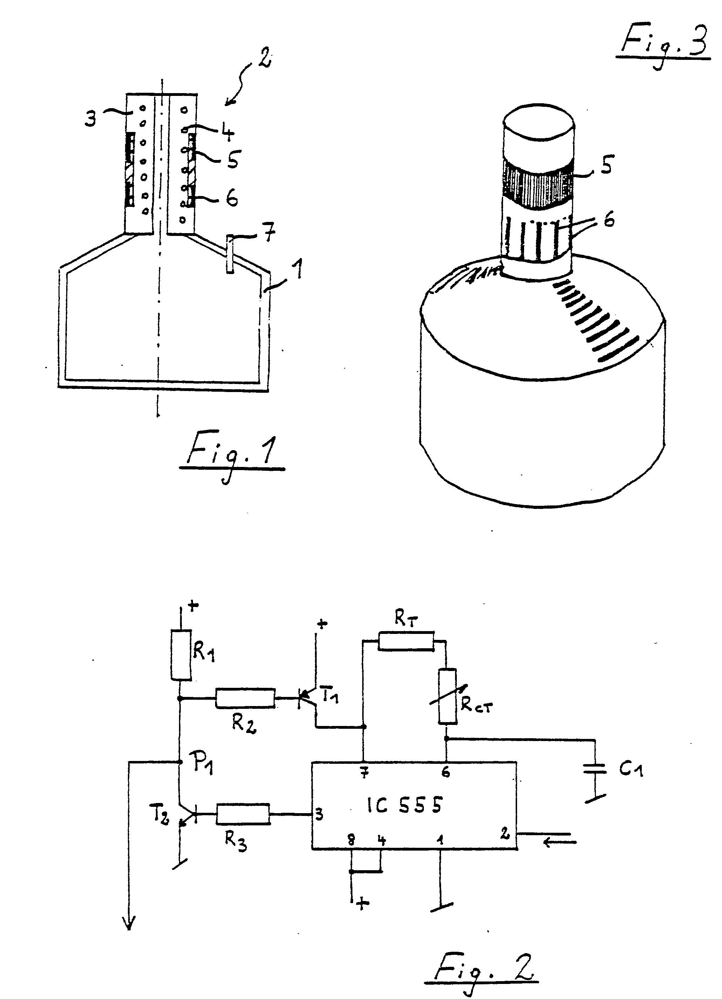

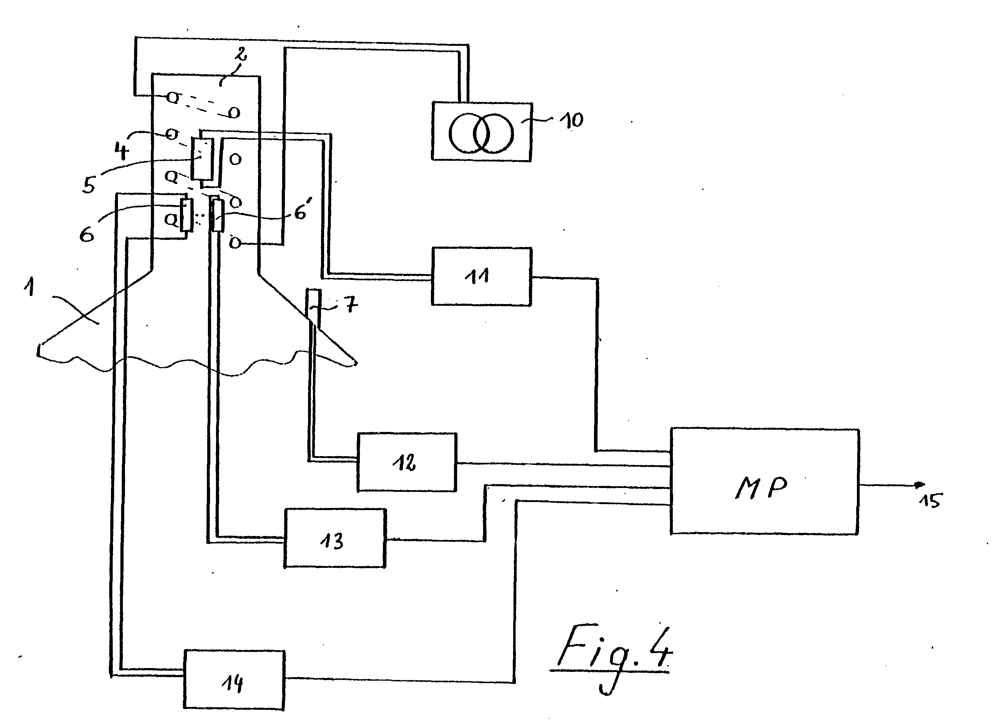

Die Erfindung wird im folgenden anhand eines in der Zeichnung dargestellten Ausführungsbeispiels näher erläutert, wobei die Figur 1 den geometrischen Aufbau eines Windgeschwindigkeitsmessgeräts und die Figur 2 eine logische Auswerteschaltung zur Bestimmung des Widerstandes der unterschiedlichen Widerstandsmessfühler bzw. Teilmessfühler zeigt. Die Figur 3 zeigt ein Windgeschwindigkeitsmessgerät entsprechend der Figur 1 in perspektivischer Darstellung, und die Figur 4 zeigt ein weiteres Blockschaltbild für die Signalgewinnung.

In Figur 1 ist ein Messgerät zur Bestimmung der Windgeschwindigkeit dargestellt, welches aus einem im Prinzip zylindrischen, alle (nicht dargestellten) elektronischen Teile enthaltenden Gehäuse 1 besteht, an dessen Oberteil eine Sensoreinrichtung 2 angeordnet ist. Die Sensoreinrichtung 2 besteht aus einem Metallzylinder 3, im dargestellten Fall einem Hohlzylinder, in dessen Wand eine Heizspirale 4 eingearbeitet ist. Das Einbringen der Heizspirale 4 in den Metallzylinder 3 kann beispielsweise durch das Ineinanderfügen von zwei Teilzylindern erfolgen, wobei der innere Teilzylinder ein Aussengewinde aufweist, in welches die Heizspirale eingepasst wird, worauf der Aussenzylinder über den inneren Zylinder geschoben wird. An der Aussenfläche des Metallzylinders 3 ist ringförmig ein System von Widerstandsfilmen angeordnet, welche den Metallzylinder 3 umfangsmässig umschliessen. Das System von Widerstandsfilmen weist einen den Metallzylinder 3 um nahezu 360° umschliessenden Widerstandsfilm auf, welcher bis auf einen nicht dargestellten Spalt geschlossen ist. Links und rechts des Spaltes sind Kontaktstellen angebracht um den Widerstandsfilm mit der Auswerteschaltung zu verbinden.

Der zweite Ring von Widerständen besteht aus einer gleichmässig um den Metallzylinder 3 herum angeordneten Serie von Einzelwiderständen, mittels welcher Unterschiede in der umfangsmässigen Temperaturverteilung des Metallzylinders gemessen werden können. Aus der in der Figur 3 gezeigten perspektivischen Darstellung des Messgeräts nach Figur 1 ist die Anordnung des Widerstandsfilms 5 sowie der Teilfilme 6 deutlich ersichtlich.

In Figur 2 ist ein logischer Zeitgeberschaltkreis dargestellt, welcher um einen integrierten Schaltkreis mit der internationalen Bezeichnung IC 555 herum aufgebaut ist. Der Zeitgeberschaltkreis besteht aus einem Transistor T1 dessen Basis über zwei Serienwiderstände R1 und R2 an positiver Spannung liegt. Der Kollektor des Transistors T1 ist mit dem Pin 7 des IC 555 verbunden, welcher seinerseits über einen temperaturabhängigen Widerstand $R_T$ in Serie mit einem Regelwiderstand $R_{CT}$ mit dem Pin 6 des IC 555 verbunden ist. Der Pin 6 ist ferner über einen Kondensator $C_1$ mit der Masse verbunden. Der IC 555 weist einen Pin 2 auf, welcher dem Start/Reset dient. Der Pin 1 ist mit Masse verbunden, die Pins 4 und 8 sind mit positiver Spannung verbunden. Der Pin 3 ist der Signalausgang, welcher über einen Widerstand R3 mit der Basis eines zweiten Transistors T2 verbunden ist. Der Emitter dieser Transistors T2 ist mit Masse verbunden, und der Kollektor ist mit einem Punkt P1 verbunden, der zwischen den Widerständen R1 und R2 liegt. Der Signalausgang der dargestellten Zeitgeberschaltung, ist durch den Kollektor des Transistors T2 gegeben. Die Arbeitsweise der beschriebenen Zeitgeberschaltung ist die folgende :

Bei geöffnetem Transistor T1 fliesst ein Ladestrom über die Widerstände $R_T$ und $R_{CT}$ welchen den Kondensator C1 auflädt. Bei Erreichen einer gewissen Spannungsschwelle am Kondensator C1 welcher mit dem Pin 6 des IC 555 verbunden ist, kippt der Ausgang 3 des IC 555 um, und der Transistor T2 wird gesperrt. Hierdurch steigt das Kollektorpotential des Transistors auf plus, und das Potential an der Basis des Transistors 1 wird soweit erhöht, dass der Transistor T1 sperrt. Wenn dies geschieht, so entlädt sich der Kondensator C1 über die Widerstände $R_{CT}$ und $R_T$ in den Pin 7, welcher intern im IC 555 über einen Transistor einen Masseschluss erhält. Wenn der Kondensator C1 bis auf eine untere Grenze entladen ist, so kippt der Ausgang 3 wieder zurück, und öffnet den Transistor T2. Hierdurch wird das Potential am Punkt P1 wieder gegen Masse gezogen, der Transistor T1 öffnet und der Ladevorgang des Kondensators C1 über die Widerstände $R_T$ und $R_{CT}$ erfolgt von neuem. Das Potential am Kollektor des Transistors T2 zeigt somit einen zeitlichen Verlauf, welcher einer Rechteckoszillation entspricht, deren Frequenz von der Grösse des Widerstandes $R_T$ abhängt, und deren Tastverhältnis 1 ist.

In weiterer Folge wird das Oszillationssignal des Kollektors des Transistors T2 in einen nicht dargestellten Mikroprozessor gefüttert, in welchem die Frequenz des eingespeisten Signals, bzw. die Impulse pro Zeiteinheit gezählt werden. Durch Vergleichen mit einer eingespeicherten Eichkurve kann auf diese Weise der Widerstand $R_T$, bzw. die Temperatur des Widerstandes $R_T$ genau bestimmt werden.

In der Figur 1 ist mit dem Bezugszeichen 7 ein weiterer temperaturabhängiger Widerstand bezeichnet, welcher temperaturmässig der Umgebungsluft angepasst ist, so dass durch Messung der Temperatur des Widerstandes 7, welche auf analoge Weise erfolgt wie die Messung der Temperatur der Widerstandsfilme 5 und 6, ein Referenzsignal erhalten wird, welches einerseits einer den Einfluss der Lufttemperatur kompensierenden Korrektur und andererseits der direkten Erfassung der Umgebungstemperatur dient.

Da die Kühlwirkung des Windes in bezug auf den Metallzylinder 3 nicht nur von der Wingeschwindigkeit sondern auch von der Temperatur der bewegten Luft abhängt, muss für eine genaue Bestimmung der Windgeschwindigkeit die Umgebungstemperatur eliminiert werden. Dies geschieht dadurch, dass die Temperatur welche mittels des Widerstandes 7 gemessen wird von der Temperatur des Widerstandsfilms 5 subtrahiert wird. Hierdurch wird als Messignal die Differenz zwischen Sensortemperatur und Umgebungstemperatur erhalten. Diese Differenz ist eine Funktion der Windgeschwindigkeit.

Ensprechend der Windrichtung ist die Temperatur des Metallzylinders 3 über seinen Umfang nicht gleich, da die Kühlwirkung des Windes auf der Seite des Metallzylinders, welche dem Wind ausgesetzt ist, grösser ist, als auf der dem Wind abgewandten Seite. In den dazwischenliegenden Winkelbereichen fällt die Temperatur zwischen den Extrempunkten nach einer bestimmten Funktion ab. Durch Messung der Temperaturen in den verschiedenen, den Widerstandsfilmen 6 entsprechenden Winkelbereichen des Metallzylinders 3 kann festgestellt werden, in welchem Winkelbereich die stärkste Kühlwirkung auftritt, und damit die Richtung aus der der Wind kommt, bestimmt werden. Durch Vergleich der Unterschiede zwischen den Messwerten der Widerstandsfilme des Messfühlers 6 links und rechts von demjenigen Teilwiderstandsfilm, welcher einen maximalen Wert anzeigt, kann durch Interpolation eine Windrichtung ermittelt werden, deren Auftreffpunkt zwischen zwei Teilwiderstandsfilmen des Messfühlers 6 liegt. Hierdurch ist eine Bestimmung der Windrichtung ermöglicht, welche eine höhere Genauigkeit zulässt, als die einfache Unterteilung der Raumrichtungen in Einheiten die der Anzahl der Teilwiderstandsfilme entspricht.

Das dargestellte Windmessgerät, bzw. zumindest die Sensoreinrichtung wird durch einen nicht dargestellten Gehäuseteil gegen direkte Sonneneinstrahlung verdeckt, um die Temperatur der Sensoreinrichtung nicht durch Strahlungswärme zu verfälschen.

In Fig. 4 ist ein Blockschaltbild dargestellt, welches die Verarbeitung der Signale aus den einzelnen Messwiderständen zeigt.

Das schematisch dargestellte Gehäuse 1 des Windmessers trägt die Sensoreinrichtung 2, in der die Heizspule 4 angeordnet ist, die von einer Stromversorgungseinrichtung 10, welche eine Konstantstromquelle umfasst, gespeist wird.

Der Widerstand 5, welcher dem Widerstandsfilm 5 der Fig. 1 und 3, bzw. dem Widerstand $R_T$ der Fig. 2 entspricht, ist an einen als Block dargestellten Schaltkreis 11 angeschlossen, welcher in seinem Aufbau der Schaltung der Fig. 2 entspricht. Das Ausgangssignal des Blocks 11 wird in den Mikroprozessor eingespeist.

Die Teilmessfühler welche den Widerständen 6 und 6′ und ferner einer Anzahl gleicher, nicht dargestellter Widerstände entsprechen, sind ebenfalls mit Blöcken 13 und 14 verbunden, welche die gleiche Schaltung darstellen wie Block 11. Schliesslich ist noch der Widerstand 7, welcher der Messung der Umgebungstemperatur dient, mit einem Block 12 verbunden, welcher ebenfalls der Schaltung von Fig. 2 enspricht.

Die Blöcke 11 bis 14 und eine Anzahl weiterer nicht dargestellter Blöcke, welche weiteren Teilmessfühlern 6 nachgeschaltet sind, werden mit dem Mikroprozessor MP verbunden. Das Programm des Mikroprozessors verknüpft die Eingangssignale und erzeugt ein digitales Ausgangssignal 15, welches wie bereits beschrieben, beispielsweise einem Anzeigegerät oder einer Steuereinrichtung für eine von der Windgeschwindigkeit abhängige Regelgrösse zugeführt wird.

**Patentansprüche**

1. Verfahren zur Messung der Windgeschwindigkeit und -richtung mittels einer durch eine Beheizungseinrichtung beheizten Sensoreinrichtung, die vom Wind in einer eine bestimmte Gleichgewichts-Temperaturverteilung über ihren Umfang erzeugenden Weise gekühlt wird, wobei mittels gleichmässig über den Umfang der Sensoreinrichtung verteilten, mit dieser in engem thermischen Kontakt stehenden elektrischen Widerstandsmessfühlern die Temperatur der Sensoreinrichtung in den der Anordnung der Messfühler entsprechenden Winkelbereichen in einer von der Selbsterwärmung der Messfühler unabhängigen Weise gemessen wird, dadurch gekennzeichnet, dass mittels der an der Aussenseite der Sensoreinrichtung angeordneten Messfühler die Temperaturverteilung an der Aussenseite der Sensoreinrichtung gemessen wird und dass mittels Signalen, welche von den Messfühlern erzeugt werden, durch Vergleich des Messwertes des maximal gekühlten Messfühlers mit den Messwerten seiner beiden benachbarten Messfühler die Windgeschwindigkeit und die Windrichtung berechnet werden.

2. Messgerät zur Bestimmung der Windgeschwindigkeit und -richtung, mit einer beheizten, dem Wind ausgesetzten Sensoreinrichtung (2) die einen ersten temperaturabhängigen elektrischen Widerstandsmessfühler (5) zur Messung der Windgeschwindigkeit, sowie einen zweiten temperaturabhängigen elektrischen Widerstandsmessfühler (6) zur Messung der Windrichtung aufweist, welche mit der Sensoreinrichtung (2) in engem thermischen Kontakt stehen, und mit einer mit den Messfühlern verbundenen Messeinrichtung, wobei die Sensoreinrichtung (2) eine beheizte Masse (3) aufweist, welche von einer Beheizungseinrichtung (4) auf eine über den Umfang der Masse verteilte Gleichgewichts-Temperaturverteilung aufheizbar ist und wobei die Temperatur der beheizten Masse (3) mittels der Messfühler (5, 6) in einer die Temperatur der Masse (3) im wesentlichen nicht beeinflussenden Weise messbar ist, dadurch gekennzeichnet, dass die Messfühler (5, 6) an der Aussenfläche der beheizten Masse angeordnet sind und dass mittels des ersten Messfühlers (5) durch Vergleich der Messwerte mit einer Eichkurve die Windgeschwindigkeit sowie durch Vergleich der Messwerte von Teilmessfühlern des zweiten Messfühlers (6) die Windrichtung bestimmbar ist.

3. Messgerät nach Anspruch 2, dadurch gekennzeichnet, dass die Masse (3) der Sensoreinrichtung (2) aus einem Metallzylinder besteht.

4. Messgerät nach Anspruch 3, dadurch gekennzeichnet, dass die Teilmessfühler des Messfühlers (6) aus um den Metallzylinder herum angeordneten, von diesem elektrisch isolierten Widerstandsfilmen gebildet sind.

5. Messgerät nach Anspruch 4, dadurch gekennzeichnet, dass die Widerstandsfilme als frequenzbestimmende Widerstände in einer logischen Zeitgeberschaltung (IC 555) geschaltet sind.

6. Messgerät nach Anspruch 5, dadurch gekennzeichnet, dass durch die Zeitgeberschaltungen vom gemessenen elektrischen Widerstand jedes Teilmessfühlers abhängende digitale Signale erzeugbar sind.

7. Messgerät nach Anspruch 6, dadurch gekennzeichnet, dass die Signale der Zeitgeberschaltung einem Mikroprozessor zuführbar sind.

8. Messgerät nach Anspruch 7, dadurch gekennzeichnet, dass der Ausgang des Mikroprozessors mit einer Anzeige- und/oder einer Steuereinrichtung für einen von der Windgeschwindigkeit abhängenden Steuervorgang verbunden ist.

## Claims

1. Method for the measurement of the speed and direction of the wind by means of a sensor device which is heated by a heating device, said sensor device being cooled by the wind in a manner such as to produce a specific equilibrium-temperatur distribution over the periphery of the sensor device, wherein the temperature of angular sections of the sensor device which correspond to positions of electrical resistivity sensors, equidistantly distributed over the periphery of the sensors device and in intimate thermal contact therewith, is measured by said electrical resistivity sensors, characterized in that the temperature distribution at the outer surface of the sensor device is measured by sensors which are arranged at the outer surface of the sensor device, and that by means of signals produced by the sensors the speed and direction of the wind are computed by comparison of the measured value of the maximally cooled sensor and the measured values of its two adjacent sensors.

2. Measuring device for measuring the speed and direction of the wind, comprising a heated sensor device (2) being exposed to the wind, a first resistivity sensor (5) for the measurement of the wind speed and a second resistivity sensor (6) for the measurement of the wind direction which are in intimate thermal contact with the sensor device (2) and a measuring device connected to said sensors, wherein the sensor device comprises a heated mass (3) which is heated by a heating device (4) to a desired equilibrium-temperature distribution spread over the periphery of the mass, characterized in that the sensors (5, 6) are arranged at the outer surface of said heated mass and in that by means of said first sensor (5) the speed of the wind is determined by comparison of the measured value with a look-up table whereby the direction of the wind is determined by comparison of the measured values of subsensors of the second sensor (6).

3. Measuring device of claim 2, characterized in that the heated mass (3) of the sensor device (2) is constituted by a metal cylinder.

4. Measuring device of claim 2, characterized in that the subsensors of sensor (6) are constituted by resistivity films positioned around and electrically insulated from said metal cylinder.

5. Measuring device of claim 4, characterized in that the resistivity films constitute frequency-determining resistivities in a logic timing circuit (IC 555).

6. Measuring device of claim 5, characterized in that the logic timing circuits produce digital signals corresponding to the measured resistivity of each sub-sensor.

7. Measuring device of claim 6, characterized in that the signals of the logic timing circuits are fed to a microprocessor.

8. Measuring device of claim 7, characterized in that the output of the microprocessor is connected with a display device and/or a control device for the control of a wind-sensitive process.

## Revendications

1. Procédé de mesure de la vitesse et de la direction du vent par un dispositif de capteur, chauffé par un dispositif de chauffage et refroidi par le vent d'une façon à établir un profil d'équilibre de température le long de son périmètre, la température du dispositif de capteur dans des secteurs angulaires étant mesurée par des capteurs de résistance électrique en contact thermique intime avec lui et distribués de façon équidistante autour de son périmètre, ces secteurs angulaires correspondant aux emplacements des capteurs de résistance, la mesure de la température étant effectuée d'une façon indépendante du chauffement propre des capteurs, caractérisé en ce que l'on mesure le profil de température sur la surface extérieure du dispositif de capteur par des capteurs qui sont arrangés à la surface extérieure du dispositif de capteur et en ce que l'on calcule à partir des signaux produits par les capteurs la vitesse et la direction du vent par comparaison de la valeur de mesure du capteur le plus refroidi avec les valeurs de mesure de ses deux capteurs voisins.

2. Dispositif de mesure de la vitesse et de la direction du vent comportant un dispositif de capteur (2) chauffé et exposé au vent, ayant un premier capteur de résistance électrique (5) dépendant de la température pour la mesure de la vitesse du vent ainsi qu'un second capteur de résistance électrique (6) dépendant de la température pour la mesure de la direction du vent qui sont arrangés de façon à être en contact thermique intime avec le dispositif de capteur (2) et un dispositif de mesure connecté aux capteurs, le dispositif de capteur (2) comportant une masse chauffée (3) qui est capable d'être chauffée par un dispositif de chauffage (4) à un profil d'équilibre de température étendue sur la surface extérieure de la masse, la température de la masse (3) étant mesurée par les capteurs (5, 6) essentiellement d'une façon à ne pas changer la température de la masse, caractérisé en ce que les capteurs (5, 6) sont arrangés à la surface extérieure de la masse chauffée et en ce que la vitesse du vent est déterminée par le premier capteur (5) en comparant sa valeur de mesure avec une table de calibrage, la direction du vent étant déterminée par comparaison des valeurs de mesure des capteurs partiels du second capteur (6).

3. Dispositif de mesure selon la revendication 2, caractérisé en ce que la masse (3) du dispositif de capteur (2) est constituée d'un cylindre métallique.

4. Dispositif de mesure selon la revendication 3, caractérisé en ce que les capteurs partiels du capteur (6) sont constitués de films de résistance qui sont arrangés autour du cylindre métallique de façon électriquement isolée de celui-ci.

5. Dispositif de mesure selon la revendication 4, caractérisé en ce que les films de résistance sont branchés comme résistances déterminant la fréquence dans un circuit logique de tempérisation (IC 555).

6. Dispositif de mesure selon la revendication 5, caractérisé en ce que les circuits de tempérisation produisent des signaux digitaux en fonction de la résistance électrique de chaque capteur partiel.

7. Dispositif de mesure selon la revendication 6, caractérisé en ce que les signaux du circuit de tempérisation sont alimentés à un micro-ordinateur.

8. Dispositif de mesure selon la revendication 7, caractérisé en ce que la sortie du micro-ordinateur est connectée à un dispositif d'affichage et/ou un dispositif de commande pour une procédure de réglage en fonction de la vitesse du vent.

_Fig. 3_

_Fig. 1_

_Fig. 2_

Fig. 4